# EUROPÄISCHE PATENTSCHRIFT

(11) **EP 0 685 380 B1**
(45) Veröffentlichungstag und Bekanntmachung des Hinweises auf die Patenterteilung: **17.09.1997**
(21) Anmeldenummer: 95107904.5
(22) Anmeldetag: 24.05.1995
(51) Int. Cl.: B62D 25/20, B60P 7/08

(54) **Profilleiste für Laderaumböden von Transportfahrzeugen**
Guiding profile for loading floor of transport vehicles
Profilé de guidage pour plancher de chargement de véhicules de transport

(30) Priorität: 03.06.1994 DE 9409059 U
(43) Veröffentlichungstag der Anmeldung: 06.12.1995
(73) Patentinhaber: WÜLLHORST GmbH & Co. KG, D-59379 Selm (DE)
(72) Erfinder: Wüllhorst, Heinrich, D-59394 Nordkirchen (DE)
(74) Vertreter: Busse & Busse Patentanwälte

(56) Entgegenhaltungen:
- DE-U- 9 204 466
- DE-U- 9 319 919
- US-A- 3 877 671

## Beschreibung

Die Erfindung bezieht sich auf eine Profilleiste aus Metall, insbesondere Aluminium, für Laderaumböden von Transportfahrzeugen gemäß dem Oberbegriff des Anspruchs 1.

Bei einer bekannten Profilleiste dieser Art (US-A-3 877 671) kann in die Verankerungsnut endseitig ein verschiebliches Anschlußglied eingesetzt und durch Verschieben in Position gebracht werden, das mit einem Gurt zur Ladungssicherung verbindbar ist.

Zur Ladungssicherung ist es ferner bekannt, Zurrschienen auf Laderaumböden aus Bohlen aus Holz oder Schichtmaterial oder aus Blechplatten anzubringen, jedoch stehen aufgesetzte Zurrschienen über die Bodenfläche vor und behindern das Abstellen von Gütern und das Beladen und Entladen des Transportfahrzeuges.

Bei Laderaumböden aus Blechplatten ist es auch bekannt, Zurrschienen zwischen den Blechplatten versenkt anzubringen und mit den Blechplatten zu verschweißen. Hierbei entsteht eine ebene Bodenfläche, jedoch erfordert die Herstellung eines derartigen Laderaumbodens einen erheblichen Aufwand und ein paßgenaues Arbeiten.

Die Erfindung befaßt sich mit dem Problem, mit geringem Aufwand einen aus Profilleisten der eingangs genannten Art gebildeten Laderaumboden mit ebener Bodenfläche und der Möglichkeit zur Sicherung von Transportgütern zu schaffen.

Dieses Problem wird durch eine Profilleiste mit den im Anspruch 1 angegebenen Merkmalen gelöst. Hinsichtlich weiterer Ausgestaltungen wird auf die Ansprüche 2 bis 10 verwiesen.

Durch die erfindungsgemäße Integration einer Zurrschiene in die Profilleiste können zusammen mit gleichförmigen verankerungsnutfreien Profilleisten herkömmlicher Art Laderaumböden ohne Zusatzarbeiten erstellt werden, die eine ebene und geschlossene Bodenfläche darbieten und ohne Festigkeitseinbußen Zurrschienen in gewünschten Bereichen aufweisen.

Vorteilhafterweise stimmt die Breite einer erfindungsgemäßen Profilleiste mit der Breite einer verankerungsnutfreien Standardprofilleiste überein, so daß unabhängig von der erwünschten Zahl an Zurrschienen im Laderaumboden des jeweiligen Transportfahrzeugs der Bodenaufbau unverändert bleiben kann.

Eine abgewandelte Ausführung sieht dagegen vor, die erfindungsgemäße Profilleiste als relativ schmale Sonderleiste auszubilden. Dies ermöglicht beispielsweise eine Anordnung von Zurrschienen in besonders geringem Abstand zueinander oder zu einer Bordwand und erlaubt es auch, bedarfsweise der Sonderleiste eine die Festigkeit erhöhende Querschnittsgestalt zu geben.

Weitere Einzelheiten und Vorteile der Erfindung ergeben sich aus der nachfolgenden Beschreibung und der Zeichnung, die zwei Ausführungsbeispiele des Gegenstands der Erfindung schematisch in einer abgebrochenen perspektivischen Teilansicht von mehreren miteinander verbundenen Profilleisten veranschaulicht.

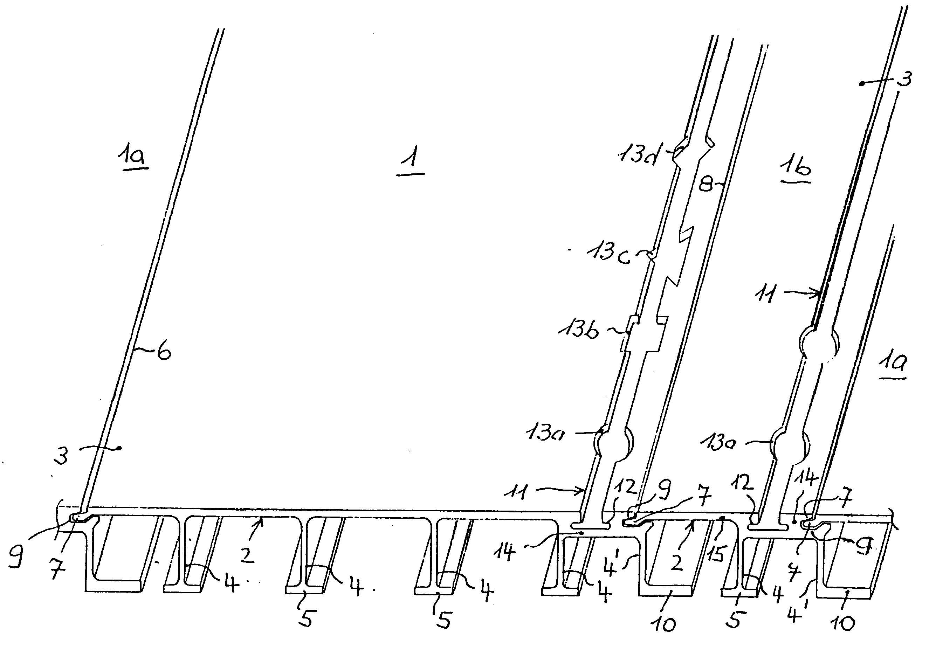

Die in Fig. 1 als Ganzes mit 1 bezeichnete Profilleiste umfaßt einen Plattenteil 2 mit einer Oberseite 3, die beim Verlegen der Profilleiste 1 Teil der Bodenfläche des Laderaumbodens eines Transportfahrzeugs bildet. Der Plattenteil 2 der Profilleiste 1 ist unterseitig mit angeformten Stützstegen 4 versehen, an denen Fußteile 5 angeformt sind, mit denen die Profilleiste 1 auf Rahmenstreben eines Fahrzeugchassis auflegbar ist. An dem einen Längsrand 6 weist der Plattenteil 2 eine als Lippe 7 ausgebildete Riegelfeder und am anderen Längsrand 8 eine eine Riegelnut bildende Aufnahmetasche 9 auf. Beim Verlegen solcher Profilleisten nebeneinander wird jeweils die Lippe 7 der zu einem Verbund aus Profilleisten hinzukommenden Profilleiste in die Aufnahmetasche 9 der zuvor verlegten Profilleiste eingehängt, wodurch die Profilleisten untereinander verbunden bzw. verriegelt werden. An dem außenliegenden Stützsteg 4', der der Aufnahmetasche 9 benachbart ist, ist der Fußteil als breiter einseitiger Befestigungsflansch 10 ausgebildet, an dem die Profilleisten mit den Rahmenstreben des Fahrzeugchassis verschraubt werden, so daß eine feste Verbindung des Laderaumbodens mit dem Chassis entsteht.

Profilleisten der vorstehend beschriebenen Ausbildung und mit einem zwischen den Rändern 6,8 durchgehenden Plattenteil sind zur Bildung von Transportfahrzeugböden bekannt. Eine solche Ausführung ist in der Zeichnung links und rechts außen angedeutet und mit 1a bezeichnet.

Im Plattenteil 2 der erfindungsgemäßen Profilleiste 1 ist eine zur Oberseite 3 hin offene, hinterschnittene Verankerungsnut 11 ausgeformt, die sich parallel zu den Längsrändern 6,7 der Profilleiste 1 über deren gesamte Länge erstreckt und eine Zurrschiene bildet, in der Anschlußglieder von Gurten oder Sperrbalken festlegbar sind. Hierzu ist die Verankerungsnut 11 als umgekehrtes T-Profil mit einem Querschenkel 12 ausgebildet. In die Wandbereiche oberhalb des Querschenkels 12 des T-Profils sind Aussparungen 13a-d eingeschnitten, die bis zum Querschenkel 12 herunterreichen und das Einführen der Anschlußglieder ermöglichen.

Anstelle der Ausformung der Verankerungsnut(en) 11 in integralen Bereichen des Plattenteils 2 kann die Verankerungsnut 11 auch jeweils in einem gesonderten Zwischenteil ausgeformt sein, der mit benachbarten Plattenteilbereichen durch Verschweißen, Verkleben, Vernieten oder Verschrauben verbunden ist. Bei einer solchen Ausführung ist es möglich, die Verankerungsnuten gewünschtenfalls an genauen Positionen innerhalb der Fläche eines Laderaumbodens vorzusehen.

Die Aussparungen können weitgehend beliebige Formen haben, sind vorzugsweise jedoch kreisförmig (13a), ovalförmig oder mehreckig (13b-d) ausgebildet. Zweckmäßig sind sie in einem gleichmäßigen Abstand über der Länge der Verankerungsnut 11 verteilt, um ein Raster für die Befestigung von Transportgut vorzugeben.

Der Plattenteil 2 ist im Bereich der Verankerungsnut 11 mit einer unterseitigen Verdickung 14 für ein von Festigkeitseinbußen freies Ausformen der Verankerungsnut 11 versehen, während in den anderen Bereichen des Plattenteils 2 aus Gründen der Materialeinsparung und der Gewichtsreduzierung eine geringere Wandstärke vorgesehen ist. Vorteilhaft nimmt die Verdickung 14 den gesamten Bereich zwischen zwei benachbarten Stützstegen 4,4' ein, wodurch eine günstige Kräfteverteilung und somit eine hohe Stabilität der Profilleiste 1 in dem Bereich erreicht ist, in dem bei einer Sicherung von Transportgütern hohe Zug-kräfte auftreten. Aus diesem Grund ist vorteilhaft auch die Verankerungsnut 11 außermittig in der Nähe des Befestigungsflansches 10 angeordnet.

Bei einem abgewandelten Ausführungsbeispiel einer erfindungsgemäßen Profilleiste 1b ist die Breite der Profilleiste 1b gegenüber der Standardbreite der Profilleiste 1 bzw. einer entsprechend breiten verankerungsnutlosen Standardprofilleiste gleicher Grundausbildung verringert, und zwar derart, daß die gesamte Oberseite 3 des Plattenteils 2 nur noch aus dem die Verankerungsnut 11 enthaltenden Teil und einem an die Lippe 7 angrenzenden Teil 15 besteht. Durch Einsatz einer solchen Sonderprofilleiste sind beispielsweise sehr kleine Abstände zwischen zwei Zurrschienen in einen Laderaumboden erreichbar.

Die Profilleisten bestehen bevorzugt aus einem Leichtmetall wie Aluminium, das im Strangpreßverfahren formbar ist. Das Einschneiden von Aussparungen (13a-d) kann vor dem Einbau oder danach, beispielsweise vom Benutzer des Fahrzeugs nach dessen Anforderungen, vorgenommen werden. Grundsätzlich besteht auch die Möglichkeit, den gesamten Fahrzeugboden aus erfindungsgemäßen Profilleisten 1 von Standardbreite zu bilden, wenn die Anforderungen an die Sicherungsmöglichkeiten dies erfordern.

## Patentansprüche

1. Profilleiste aus Metall, insbesondere Aluminium, für einen Laderaumboden von Transportfahrzeugen, der aus einer Mehrzahl von nebeneinander auf den Rahmenstreben des Fahrzeugchassis verlegten, an ihren einander zugewandten Längsrändern (6,8) über Riegelnut und Riegelfeder untereinander formschlüssig verbundenen Profilleisten zusammengesetzt ist, mit einem die Bodenfläche darbietenden oberen Plattenteil (2), der entlang einem Längsrand (6) mit einem Vorsprung (7), und entlang seinem anderen Längsrand (8) mit einer den Vorsprung (7) aufnehmenden Aufnahmetasche (9) versehen ist, wobei im Plattenteil (2) zumindest eine zur Oberseite (3) hin offene, hinterschnittene Verankerungsnut (11) ausgeformt ist, die ein umgekehrtes T-Profil aufweist, sich parallel zu den Längsrändern (6,8) der Profilleiste (1,1b) über deren gesamten Länge erstreckt und eine Zurrschiene bildet, **dadurch gekennzeichnet,** daß in die Wandbereiche oberhalb des Querschenkels (12) des T-Profils der Verankerungsnut (11) sich bis zum Querschenkel (12) heraberstreckende, einander beabstandete Aussparungen (13) eingeschnitten sind, die kreisförmig, ovalförmig oder mehreckig ausgebildet und über die Länge der Verankerungsnut (11) verteilt sind.

2. Profilleiste nach Anspruch 1, **dadurch gekennzeichnet,** daß die Profilleiste (1) in ihrer Breite mit der Breite von gleichförmigen verankerungsnutfreien Standardprofilleisten übereinstimmt und mit solchen in beliebigem Wechsel verlegbar ist.

3. Profilleiste nach Anspruch 1, **dadurch gekennzeichnet,** daß sie eine gegenüber der Breite von gleichförmigen verankerungsnutfreien Standardprofilleisten verringerte Breite aufweist und zwischen solchen als Sonderprofilleiste (1b) verlegbar ist.

4. Profilleiste nach einem der Ansprüche 1 bis 3, **dadurch gekennzeichnet,** daß der Plattenteil (2) unterseitig mit sich abwärts erstreckenden, mit Fußteilen (5) auf den Rahmenstreben des Fahrzeugchassis aufsetzbaren Stützstegen (4) versehen ist, von denen der Fußteil an dem der Aufnahmetasche (9) benachbarten außenliegenden Stützsteg (4') einen verbreiterten Befestigungsflansch (10) aufweist.

5. Profilleiste nach einem der Ansprüche 1 bis 4, **dadurch gekennzeichnet,** daß die Verankerungsnut (11) mittig in der Profilleiste (1) angeordnet ist.

6. Profilleiste nach einem der Ansprüche 1-4, **dadurch gekennzeichnet,** daß die Verankerungsnut (11) außermittig und nahe der Aufnahmetasche (9) angeordnet ist.

7. Profilleiste nach einem der Ansprüche 1 bis 6, **dadurch gekennzeichnet,** daß der Plattenteil (2) im Bereich der Verankerungsnut (11) eine unterseitige Verdickung (14) aufweist.

8. Profilleiste nach Anspruch 7, **dadurch gekennzeichnet,** daß die Verdickung (14) den ganzen Bereich zwischen benachbarten Stützstegen (4,4') einnimmt.

9. Profilleiste nach einem der Ansprüche 1 bis 8, **dadurch gekennzeichnet,** daß die Verankerungsnut (11) in einem in den Plattenteil (2) eingefügten und mit dem Plattenteil verbundenen Zwischenteil ausgeformt ist.

10. Profilleiste nach einem der Ansprüche 1 bis 8, **dadurch gekennzeichnet,** daß die Verankerungsnut (11) in einem integralen Bereich des Plattenteils (2) ausgeformt ist.

## Claims

1. A profile strip of metal, particularly aluminium, for the floor of the loading space of a transport vehicle and which is composed of a plurality of profile strips laid beside one another on the frame struts of the vehicle chassis and connected to one another in form-locking manner along their mutually facing longitudinal edges (6, 8) by means of interlocking tongues and grooves, with a upper plate part (2) providing the floor surface and which is provided along one longitudinal edge (6) with a projection (7) and along its other longitudinal edge (8) with a receiving pocket (9) to accommodate the projection (7), whereby there is formed in the plate part (2) at least one undercut anchoring groove (11) open towards the top surface (3) and which has a inverted T-shaped cross-section, extends parallel with and over the total length of the longitudinal edges (6, 8) of the profile strip (1, 1b) and forms a locking bar, characterised in that into the wall areas of the transverse arm (12) of the T-shaped profile of the anchoring groove (11) and extending as far as the trasnverse arm (12) there are spaced-apart recesses (13) of circular, oval or polygonal construction which are distributed over the length of the anchoring groove (11).

2. A profile strip according to claim 1, characterised in that in its width, the profile strip (1) conforms to the width of identically shaped standard profile strips which have no anchoring groves and can be laid with such strips in any desired alternation.

3. A profile strip according to claim 1, characterised in that compared with the width of identically shaped standard profile strips in which there are no anchoring grooves, its width is smaller and it can be laid between such standard profile strips and constitute a special profile strip (1b).

4. A profile strip according to one of claims 1 to 3, characterised in that the plate part (2) has on its under side downwardly extending supporting webs (4) with foot parts (5) which can be placed on the frame struts of the vehicle chassis and of which the foot part on the outer supporting web (4') adjacent the receiving pocket (9) comprises a widened fixing flange (10).

5. A profile strip according to one of claims 1 to 4, characterised in that the anchoring groove (11) is disposed in the centre of the profile strip (1).

6. A profile strip according to one of claims 1 to 4, characterised in that the anchoring groove (11) is disposed eccentrically and close to the receiving pocket (9).

7. A profile strip according to one of claims 1 to 6, characterised in that the plate part (2) has on its under side a thickening (14) in the region of the anchoring groove (11).

8. A profile strip according to claim 7, characterised in that the thickening (14) occupies the entire area between adjacent supporting webs (4, 4').

9. A profile strip according to one of claims 1 to 8, characterised in that the anchoring groove (11) is formed in an intermediate part incorporated into and connected to the plate part (2).

10. A profile strip according to one of claims 1 to 8, characterised in that the anchoring groove (11) is formed in an integral area of the plate part (2).

## Revendications

1. Profilé en métal, notamment en aluminium, pour le plateau de chargement de véhicules de transport, composé d'une multiplicité de profilés juxtaposés sur les entretoises du châssis du véhicule, et dont les bords longitudinaux (6, 8) juxtaposés sont réunis par une rainure et une languette de verrouillage, par une liaison par la forme, ainsi que d'une partie de plaque (2) supérieure constituant la surface du plateau, dont le bord longitudinal (6) est muni d'une saillie (7) et dont l'autre bord longitudinal (8) est muni d'un logement (9) recevant la saillie (7), la partie de plaque (2) ayant au moins une rainure d'accrochage (11) à contre-dépouille, ouverte vers le côté supérieur (3), et ayant une section en forme de T inversée, qui s'étend sur toute la longueur des bords longitudinaux (6, 8) des profilés (1, 1b), parallèlement à ceux-ci, en formant un rail d'amarrage,
caractérisé en ce que
dans les zones de paroi au-dessus de la branche transversale (12) du profil en T de la rainure d'accrochage (11), jusque vers la branche transversale (12) qui descend, il y a des cavités (13) écartées, coupées, qui ont une forme de cercle, d'ovale ou de polygone et sont réparties sur toute la longueur de la rainure d'accrochage (11).

2. Profilé selon la revendication 1,
caractérisé en ce qu'
il (1) correspond en largeur à celle de profilés standard de même forme, sans rainure d'accrochage, et peut se placer suivant une alternance quelconque.

3. Profilé selon la revendication 1,
caractérisé en ce que
par rapport à la largeur de profilés standard de même forme, sans rainure d'accrochage, il présente une largeur réduite et peut se placer entre de tels profilés comme profilés particuliers (1b).

4. Profilé selon l'une des revendications 1 à 3,
caractérisé en ce que
la partie de plaque (2) comporte sur le côté inférieur, des parties de pied (5) qui descendent et des rainures d'appui (4) qui viennent sur les entretoises du châssis du véhicule, dont la partie de pied comporte sur la nervure d'entretoise (4') extérieure, voisine de la partie de pied, au niveau du logement (9), une bride de fixation (10) élargie.

5. Profilé selon l'une des revendications 1 à 4,
caractérisé en ce que
la rainure d'accrochage (11) est prévue au milieu du profilé (1).

6. Profilé selon l'une des revendications 1 à 4,
caractérisé en ce que
la rainure d'accrochage (11) est décentrée et se trouve à proximité du logement (9).

7. Profilé selon l'une des revendications 1 à 6,
caractérisé en ce que
la partie de plaque (2) présente un renforcement (14) sur sa face inférieure, au niveau de la rainure d'accrochage (11).

8. Profilé selon la revendication 7,
caractérisé en ce que
le renforcement (14) occupe toute la zone comprise entre des rainures d'appui (4, 4') voisines.

9. Profilé selon l'une des revendications 1 à 8,
caractérisé en ce
la rainure d'accrochage (11) est réalisée dans une pièce intermédiaire insérée dans la partie de plaque (2) et reliée à cette partie de plaque.

10. Profilé selon l'une des revendications 1 à 8,
caractérisé en ce que
la rainure d'accrochage (11) est formée dans une zone intégrale de la partie de plaque (2).
